# EUROPEAN PATENT APPLICATION

(11) **EP 2 587 282 A1**
(43) Date of publication of application: **01.05.2013**
(21) Application number: 11798039.1
(22) Date of filing: 16.06.2011
(51) Int. Cl.: G02B 5/08, F24J 2/10

(54) **REFLECTIVE PANEL FOR SOLAR POWER GENERATION**

(30) Priority: 25.06.2010 JP 2010144801
(71) Applicant: Konica Minolta Advanced Layers, Inc., Hachioji-shi Tokyo 192-8505 (JP)
(72) Inventor: EGURO, Yayoi, Hachioji-shi Tokyo 192-8505 (JP)
(74) Representative: Gille Hrabal
(86) International application number: PCT/JP2011/063791
(87) International publication number: WO 2011/162154

(57) **Abstract**

Disclosed is a reflective panel for solar power generation, which comprises a film mirror affixed to a self-supporting substrate, the film mirror having at least a flexible support body and a light/heat reflective layer provided on at least one surface of the support body, wherein the reflective panel for solar power generation comprises either of the following structures A or B for the self-supporting substrate. A: The self-supporting substrate has an intermediate layer provided between a pair of metal flat plates, and the intermediate layer is a layer having a hollow structure or a layer formed from a resin material. B: The self-supporting substrate comprises a resin material layer having a hollow structure.

## Description

### TECHNICAL FIELD

The present invention relates to a reflector for solar thermal power generation and, more specifically, relates to a reflector for solar thermal power generation and a reflection device for solar thermal power generation which are lightweight, provide ease of transportation, assembly, and maintenance including replacement, and can be used with less power consumption.

### BACKGROUND ART

In recent years, uses of natural energy are being considered as energy alterative to fossil fuel energy including oil and natural gas. Among the natural energy, solar energy, which is the most stable as the alternative energy to fossil fuels and has a large amount of energy, is attracting attention.

The solar energy is a very potent alternative energy. However, from the perspective of utilizing the solar energy, it is thought that the following problems occur:
(1) Solar energy has a low energy density.
(2) Solar energy is difficult to store and transport.

Currently, solar batteries are being actively studied and developed, and the use efficiency of sunlight is increasing. However, the recovery efficiency thereof has not yet reached the enough level.

As another method of converting sunlight to energy, solar thermal power generation has been attracting attentions, which reflects and collects sunlight with a mirror and uses the obtained heat as a medium to generate electricity. With this method, the obtained heat is stored, so that electricity can be generated night and day. In addition, from the long-term view, it is considered that the power generation efficiency thereof is higher than that of solar batteries, and the solar thermal generation can effectively utilize sunlight.

The mirrors used in the solar thermal power generation are now glass mirrors including glass base materials. The glass mirrors are supported by support materials made of metal to be used as reflectors which collect sunlight. However, large glass mirrors composed of thin glass base materials can be damaged in the process of installation or can be broken by objects flying in strong wind. If the thickness of the glass base materials is increased, the glass mirrors become very heavy and are difficult to handle at installation. Moreover, the transportation cost thereof is increased. In order to efficiently collect sunlight, the reflectors for collecting light need to be driven to track the movement of the sun. Accordingly, if the weight of the reflectors is increased, the driving power of the reflectors is increased, the power consumption for driving the same is increased, and the solar thermal power generation therefore becomes inefficient. Accordingly, instead of the glass mirrors, use of film mirrors is attracting attentions, which includes a light/heat reflection layer on a flexible base material (resin base material) (see Patent Document 1, for example).

In many cases, these film mirrors are attached to metal base materials made of aluminum or the like for use as reflectors for solar thermal power generation. However, the metal base materials have high elasticity and high specific gravity. If the metal base materials are made thin for the purpose of weight reduction, the metal materials do not have self-supporting property. The metal base materials need to be fixed by a different supporting material in order to provide the light collecting ability. Accordingly, the power consumption for tracking the sun cannot be reduced. On the other hand, if the metallic base materials are made thick for the self-supporting property, the reflectors become heavy, and the power consumption for tracking the sun cannot be reduced.

### CITATION LIST

### PRIOR ART DOCUMENTS

### PATENT LITERATURE

Patent Document 1: JP-A-2005-59382

### SUMMARY OF THE INVENTION

### PROBLEMS TO BE SOLVED BY THE INVENTION

An object of the present invention is to provide a reflector for solar thermal power generation and a reflection device for solar thermal power generation which are lightweight and provide ease of transportation, assembly, and maintenance including replacement and can operate with less power consumption.

### MEANS FOR SOLVING THE PROBLEM

The above-described object can be achieved by the following configurations.

1. A reflector for solar thermal power generation, including:
   a light collecting mirror attached to a self-supporting base material, the light collecting mirror including at least: a flexible supporting body; and a light/heat reflective layer provided on at least one side of the supporting body, in which
   the self-supporting base material has any one of configurations A and B below:
      A: the base material includes a pair of metallic plates and an intermediate layer provided between the metallic plates, the intermediate layer being a layer having a hollow structure or a layer composed of a resin material; and
      B: the base material is composed of a resin material layer having a hollow structure.
2. The reflector for solar thermal power generation according to the above 1, in which the hollow structure is a honeycomb structure or a bubble structure of resin foam.
3. The reflector for solar thermal power generation according to the above 1 or 2, in which the base material has a curved shape.
4. The reflector for solar thermal power generation according to any one of above 1 to 3, in which the light collecting mirror including the light/heat reflective layer is a light collecting mirror including a supporting body made of glass or resin film.

### EFFECT OF THE INVENTION

According to the present invention, it is possible to provide a reflector for solar thermal power generation and a reflection device for solar thermal power generation which are lightweight and provide ease of transportation, assembly, and maintenance including replacement.

### MODES FOR CARRYING OUT THE INVENTION

A description is given of best modes for carrying out the present invention in detail below, but the present invention is not limited to these modes.

Hereinbelow, a description is given of a reflection device for solar thermal power generation of the present invention in detail.

### (Configuration of Reflection Device for Solar Thermal Power Generation)

The basic configuration of the reflection device for solar thermal power generation of the present invention includes: a reflector for solar thermal power generation composed of a film mirror attached to a self-supporting base material, the film mirror including a flexible supporting body and a light/heat reflective layer which is provided on at least one of the surfaces of the supporting body; and a holder member holding the reflector for solar thermal power generation so that reflector can be driven to track the movement of the sun.

A solar thermal power generation system is to generate electricity using solar light energy. In one of the known solar thermal power generation systems, which is called a solar power tower, sunlight is reflected on a number of reflective mirrors, which are provided around a tower and are capable of tracking the sun (which are also called heliostat mirrors and correspond to the reflection device for solar thermal power generation of the present invention). The reflected sunlight is collected to a heat exchanger through a collector mirror provided on the tower for heating, and the thus-obtained heat energy is used to generate electricity. Moreover, another known method uses a parabola reflecting mirror (which is called a dish-type reflecting mirror and corresponds to the reflection device for solar thermal power generation of the present invention). The heat energy which is obtained by a heat exchanger provided at the light collected position is used to generate electricity. Still another method uses a half cylinder-shaped mirror (called a trough-type reflecting mirror and corresponding to the reflective mirror for solar thermal power generation of the present invention) to focus sunlight to a pipe installed at the light collecting position of the cylindrical mirror, thus heating liquid (oil) flowing through the pipe. The thus-obtained heat is used to generate electricity. In any one of the aforementioned solar thermal power generation systems, the reflection device for solar thermal power generation of the present invention can be preferably used. Use of the reflection device for solar thermal power generation of the present invention can reduce the power consumption for tracking the sun.

Next, each constituent component constituting the reflection device for solar thermal power generation is described.

The reflection device for solar thermal power generation of the present invention includes: a reflector mainly composed of a film mirror and a self-supporting base material; and a holder member holding the reflector.

Next, each constituent components of the reflector of the present invention is described in detail.

### (Constituent Component of Reflector)

Next, each constituent component constituting the reflector of the present invention is described in detail.

### (Film Mirror)

The film mirror used in the reflector of the present invention includes: a flexible supporting body; and a light/heat reflective layer provided on at least one of the surfaces of the supporting body.

### (Flexible Supporting Body)

The material constituting the flexible supporting body, which constitutes the film mirror applicable to the reflector of the present invention, is not particularly limited. In terms of flexibility and lightning, preferable examples thereof are polyester, polyethylene terephthalate, polyethylene naphthalate, acrylic, polycarbonate, polyolefin, cellulose, and polyamide. The supporting body can be made of glass materials as long as the supporting body is flexible.

In the present invention, the "flexibility" of the flexible supporting body is defined as follows: A substance is considered to have flexibility if the substance is supported at positions, which are located at a distance of 1.5 m from each other, and is pressed at the center, the substance bends 5 cm or more down without breaking. Considering the case where the film mirror is wound to a roll for transportation, the supporting body which can bend 10 cm or more down at a similar evaluation is preferably used. It is particularly preferable that the supporting body is flexible so that the film mirror can be wound around a cylindrical material of a diameter of about 50 cm without breaking.

The thickness of the flexible supporting body is preferably about 10 to 125 µm, although the thickness depends on the strength required as a film mirror.

In order to enhance the adhesion between the supporting body and a layer provided on the same and the like, the surface of the supporting body may be subjected to corona discharge treatment, plasma treatment, or the like.

Preferably, the supporting body contains any one of benzotriazole, benzophenone, triazine, cyanoacrylate, and polymer ultraviolet absorbing agents. Especially in the case where the supporting body is made of resin, it is preferable that the supporting body contains an ultraviolet absorbing agent.

### (Ultraviolet Absorbing Agent)

The ultraviolet absorbing agent included in the supporting body is preferably excellent in ability to absorb ultraviolet light with a wavelength of not more than 370 nm and from the perspective of use of sunlight, absorbs less visible light with a wavelength of not less than 400 nm.

Examples of the ultraviolet absorbing agent include oxybenzophenone compounds, benzotriazole compounds, salicylic ester compounds, benzophenone compounds, cyanoacrylate compounds, nickel complex salt compounds, and triazine compounds. Preferably, the ultraviolet absorbing agent is a benzophenone compound, a less-colored benzotriazole compound, or a triazin compound. Moreover, the ultraviolet absorbing agent may be the ultraviolet absorbing agent described in Japanese Patent Laid-open Publication No. 10-182621 or No. 8-337574 or the polymer ultraviolet absorbing agent described in Japanese Patent Laid-open Publication No. 6-148430 or No. 2003-113317.

### (Anchor Layer)

The film mirror used in the present invention may include an anchor layer for the purpose of enhancing the adhesion between the supporting body and light/heat reflective layer.

The material of the anchor layer is not particularly limited as long as the material has a function to enhance the adhesiveness between the light/heat reflective layer and supporting body. Preferably, the material thereof is resin. Accordingly, the anchor layer is required to have: high adhesiveness that allows the supporting body and light/heat reflective layer to adhere to each other; heat resistance high enough to be resistant to heat which is given when the light/heat reflective layer is formed by a vacuum deposition method or the like; and smoothness to extract the high reflective performance inherent in the reflective layer.

The resin used in the anchor layer according to the present invention is not particularly limited as long as the resin satisfies the conditions about the aforementioned adhesiveness, heat resistance, and smoothness and can be polyester resin, acrylic resin, melamine resin, epoxy resin, polyamide resin, vinyl chloride resin, or vinyl chloride-vinyl acetate copolymer resin solely or a mixture thereof. In terms of the weather resistance, the resin is preferably a resin mixture of polyester resin and melamine resin and more preferably a thermosetting resin obtained by mixing the above resin mixture with a curing agent such as isocyanate. In the present invention, the thickness of the anchor layer is preferably 0.01 to 3 µm from the perspective of the adhesiveness, smoothness, and the reflectance or the like of the reflective layer, and more preferably, 0.1 to 1 µm.

The anchor layer can be formed using a conventionally-known wet coating method, such as gravure coating, reverse coating, die coating, and the like.

### (Light/heat Reflective Layer)

As the metal constituting the light/heat reflective layer according to the present invention, silver or silver alloy can be used, for example, and moreover, gold, copper, aluminum, and alloys thereof can be used. Preferably, silver is used because silver has a high reflectance in the visible light region. The thus-configured light/heat reflective layer plays a role as a reflective film reflecting light and heat. The light/heat reflective layer made of silver or silver alloy can increase the reflectance of the film mirror in the infrared and visible light regions and reduce the dependency of the reflectance on the incident angle. The infrared and visible light regions mean a wavelength region of 2500 to 400 nm. The incident angle refers to an angle with respect to a vertical line (the normal line) to the film surface.

The silver alloy is preferably an alloy composed of silver and one or more other metals selected from a group consisting of gold, palladium, tin, gallium, indium, copper, titanium, and bismuth, from the view point of enhancing the durability of the light/heat reflective layer. As the other metal, gold is especially preferred in terms of the resistance to humidity at high temperature and the reflectance.

When the light/heat reflective layer is composed of a film made of silver alloy, the content of silver is preferably 90 to 99.8 at% of the total (100%at) of silver and the other metals in the reflective layer. Moreover, the content of the other metal is preferably 0.2 to 10 at% in terms of the durability.

The thickness of the light/heat reflective layer is preferably 60 to 300 nm and more preferably 80 to 200 nm. If the thickness of the reflective layer is less than 60 nm, the reflective layer is thin and transmits light. Accordingly, the film mirror could have low reflectance in the visible light region. The reflectance increases in proportional to the thickness up to a thickness of 200 nm but does not depend on the thickness if the thickness is 200 nm or more. If the thickness exceeds 300 nm, the surface of the light/heat reflective layer is likely to be rough, thereby scattering light and reducing the reflectance in the visible light region.

The film mirror is required to be glossy. With the method of producing metallic foil and attaching the same, however, the film mirror sometimes loses the gloss because of the surface roughness. Accordingly, in the film mirror, which is required to have uniform surface roughness over a wide area range, preferably, the light/heat reflective layer is formed by a wet or dry process.

The wet process is a generic term used to refer to a plating process and is a process to form film by precipitating metal from a solution. Concrete examples thereof include silver mirror reaction.

On the other hand, the dry process is a generic term used to refer to a vacuum film forming process, and concrete examples thereof are resistance-heating vacuum deposition, electron beam-heating vacuum deposition, ion plating, ion beam-assisted vacuum deposition, and spluttering. In the present invention, in particular, a deposition process capable of performing a roll-to-roll process continuously forming film is preferably used. In other words, a film mirror manufacturing method to manufacture the film mirror according to the present invention is preferably a manufacturing method including a step of forming the reflective layer made of silver by silver vapor deposition.

### (Top Coat Layer)

The film mirror used in the present invention may be provided with a top coat layer adjacent to a side of the light/heat reflective layer far from the supporting body. The top coat layer contains a corrosion inhibitor to prevent degradation due to corrosion of the metal forming the light/heat reflective layer, for example, silver, and contributes to an increase in adhesive force to an adhesive layer formed thereon.

The resin which can be used to form the top coat layer can be polyester resin, acrylic resin, melamine resin, or epoxy resin solely or can be a resin mixture thereof. In terms of the weather resistance, the resin of the top coat layer is preferably polyester resin or acrylic resin and is more preferably a thermosetting resin obtained by mixing a curing agent such as isocyanate into the above resin.

In terms of the adhesiveness, the weather resistance, and the like, the thickness of the top coat layer is preferably 0.01 to 3 µm and more preferably 0.1 to 1 µm.

The top coat layer can be formed by a conventionally-known coating method such as gravure coating, reverse coating, die coating, or the like.

Preferably, the corrosion inhibiter of the light/heat reflective layer, which is contained in the top coat layer according to the present invention, roughly includes a corrosion inhibitor and an antioxidant including a group adsorptive to silver. Herein, corrosion refers to a phenomenon that metal (silver) is chemically or electrochemically eroded or is degraded in material quality by environmental substances around the metal (see JIS Z0103-2004).

Moreover, preferably, the film mirror according to the present invention has a configuration in which the anchor layer contains an antioxidant and the top coat layer contains a corrosion inhibitor having an adsorptive group to silver.

The preferable content of the corrosion inhibitor is generally in a range of 0.1 to 1.0 g/m², although the optimal content thereof depends on the used compound.

### (Corrosion Inhibitor including Adsorptive Group to Silver)

The corrosion inhibitor which includes a silver adsorptive group and is applicable to the present invention is desirable at least one of amines, derivatives thereof, compounds including pyrrole rings, compounds including triazole rings, compounds including pyrazole rings, compounds including thiazole rings, compounds including imidazole rings, compounds including indazole rings, copper chelate compounds, thioureas, compounds including mercapto groups, and naphthalenes or a mixture thereof.

### (Antioxidant)

The corrosion inhibitor for the light/heat resistive layer which is included in the top coat layer according to the present invention can be an antioxidant.

The antioxidant is preferably a phenol antioxidant, a thiol antioxidant, or a phosphite antioxidant.

### (Adhesive Layer)

The film mirror used in the present invention can include the adhesive layer for the purpose of fixing the film mirror on the self-supporting base material.

The adhesive layer is not particularly limited and can be any one of dry laminating agents, wet laminating agents, adhesives, heat sealing adhesives, hot-melt adhesives, and the like. Examples of the adhesive layer include polyester resin, urethane resin, polyvinyl acetate resin, acrylic resin, and nitrile rubber.

The laminating method is not particularly limited and is preferably continuous roll lamination, for example, in terms of the economy and productivity.

The normal thickness of the adhesive layer is preferably about 1 to 50 µm in terms of the adhesive effect, drying speed, and the like.

Moreover, the film mirror used in the present invention can further include the following layers when needed.

### (Scratch Resistant Layer)

In the present invention, a scratch resistant layer can be provided as the outermost layer of the film mirror. This scratch resistant layer is provided for preventing scratches. The scratch resistant layer can be composed of acrylic resin, urethane resin, melamine resin, epoxy resin, organic silicate compound, silicone resin, or the like. In terms of the hardness and curability, silicone resin or acrylic resin is preferred in particular. Furthermore, in terms of the durability, the flexibility and the productivity, active energy ray curable acrylic resin or thermosetting acrylic resin is preferable.

The active energy ray curable acrylic resin or thermosetting acrylic resin refers to a composition containing polyfunctional acrylate, acrylic oligomer, or reactive diluent as a polymerisation curable component. In addition, the composition may contain a photoinitiator, a photosensitizer, a thermal polymerization initiator, and a modifier if necessary.

The acrylic oligomer refers to a composition including a reactive acrylic group bonded to an acrylic resin backbone, 2. polyester acrylate, urethane acrylate, epoxy acrylate, polyether acrylate, or the like. In addition, the acrylic oligomer can be a composition including an acrylic group bonded to a rigid backbone of melamine, isocyanuric ester, or the like.

The reactive diluent serves the function as a solvent at the coating process as a medium of the coating material. Moreover, the reactive diluent itself includes a group reacting with monofunctional or polyfunctional acrylic oligomer and forms a copolymer component of the coating.

In the present invention, the scratch resistant layer can included various additives as necessary to an extent not degrading the effect of the present invention. Examples of the additives can include antioxidants, light stabilizers, stabilizes such as ultraviolet absorbers, surfactants, leveling agents, and antistatic agents.

The leveling agents are effective on reducing the surface roughness in the process of coating the scratch resistant layer especially. Preferable examples of silicone leveling agents include dimethylpolysiloxane-polyoxyalkylene copolymer (for example, SH190 made by Dow Corning Toray Corporation).

### (Gas Barrier Layer)

The film mirror according to the present invention can include a gas barrier layer for the purposes of preventing film base materials and various functional layers protected by the film base materials from deteriorating due to variations in humidity, for Example, high humidity.

In the present invention, preferably, the moisture proof property of the gas barrier layer is controlled so that the water vapor permeability thereof at 40°C and 90%RH is not more than 100 g/m²·day/µm, preferably 50 g/m² -day/pm, more preferably 20 g/m²·day/µm. Moreover, the oxygen permeability is preferably not more than 0.6 ml/m²/day/atm under the conditions of a measurement temperature of 23°C and a humidity of 90%RH. The water vapor permeability can be measured by a water vapor permeability measurement system PERMATRAN-W3-33 made by MOCON CO., for example.

The gas barrier layer applicable to the present invention is mainly composed of metal oxide. The metal oxide of the gas barrier layer is silicon oxide, aluminum oxide, composite oxide formed from silicon oxide or aluminum oxide as a starting material, zinc oxide, tin oxide, indium oxide, niobium oxide, chromium oxide, or the like. In terms of the water vapor barrier performance, silicon oxide, aluminum oxide, or composite oxide formed from silicon or aluminum as a starting material is preferred in particular. The layers of the above materials are formed by vacuum processes such as PVD processes (physical vapor deposition processes) including vacuum vapor deposition, sputtering, and ion plating, and CVD processes (chemical vapor deposition processes). The thickness of the gas barrier made of metal oxide is preferably in a range of 5 to 300 nm and more preferably 10 to 300 nm.

In the present invention, the gas barrier layer which is formed on the film base material and is composed of a silicon oxide or aluminum oxide layer or a composite oxide formed from silicon oxide or aluminum oxide, as a starting material is excellent in barrier performance against gas or vapor of oxygen, carbon dioxide, air, and the like.

Furthermore, preferably, the silicon oxide or aluminum oxide, layer or the composite oxide formed from silicon oxide, or aluminum oxide as a starting material has a thickness of not more than 1 µm and has an average light transmittance of not less than 90%. This allows the film mirror to efficiently reflect sunlight without a light loss.

### (Sacrificial Protection Layer)

The film mirror according to the present invention can include a sacrificial protection layer. The sacrificial protection layer of the present invention refers to a layer using sacrificial protection to protect the light/heat reflective layer. Provision of the sacrificial protection layer between the light/heat reflective layer and supporting body can enhance the corrosion resistance of the light/heat reflective layer. In the present invention, the sacrificial protection layer is preferably made of copper having a high ionization tendency than that of silver which is preferably used in the light/heat reflective layer. The sacrificial protection layer made of copper is provided under the reflective layer made of silver to prevent deterioration of silver.

### (Self-supporting Base Material)

Next, a description is given of the self-supporting base material used in the reflector of the present invention.

The self-supporting base material used in the reflector of the present invention is characterized by including one of the following configurations A and B.

A: The base material includes a pair of metallic plates and an intermediate layer provided between the metallic plates, the intermediate layer being a layer having a hollow structure or a layer composed of a resin material.

B: The base material is composed of a resin material layer having a hollow structure.

The term "self-supporting" of the "self-supporting base material" in the present invention refers to having rigidity enough to support the base material by supporting opposite edges of the material cut in a size of the based material of the reflector. When the base material of the reflector has the self-supporting property, the reflector is excellent in operability in the process of installation, and the holder member holding the reflector can be configured to have a simple structure. This can reduce the weight of the reflection device and can reduce the power consumption for tracking the sun.

Like the configuration A, the self-supporting base material is composed of a pair of metallic plates and an intermediate layer provided between the metallic plates, and the intermediate layer is configured to have a hollow structure or is made of a resin material. Accordingly, the base material has high flatness due to the metallic plates. The intermediate layer is a layer which has a hollow structure or is made of a resin material, so that the base material can be significantly reduced in weight compared to the base material composed of only a metallic plate. Moreover, the comparatively lightweight intermediate layer can increase the frigidity. The base material can be therefore a lightweight supporting body having the self-supporting property. In the case where the intermediate layer is a layer composed of a resin material, if the resin material layer is configured to have a hollow structure, the weight of the base material can be further reduced. Furthermore, when the intermediate layer has a hollow structure, the intermediate layer plays a role as a heat insulator and prevents the variation in temperature of the metallic plate on the back side from being transmitted to the film mirror, thus preventing condensation and deterioration due to heat.

The metallic plates forming the surface layer of the configuration A can be preferably composed of a metallic material having high thermal conductivity, such as steel plates, copper plates, aluminum plates, aluminum-plated steel plates, aluminum alloy-plated steel plates, copper-plated steel plates, tin-plated steel plates, chromium-plated steel plates, and stainless steel plates. In the present invention, plated steel plates, stainless steel plates, aluminum plates, and the like, which have good corrosion resistance, are preferred in particular.

In the case where the intermediate layer has a hollow structure in the configuration A, materials including metal, inorganic material (glass and the like), and resin can be used. The hollow structure is implemented with: a bubble structure composed of resin foam; a three-dimensional structure having walls composed of metal, inorganic material, or resin material (honeycomb structure or the like); resin material added with fine hollow particles; or the like. The bubble structure of the resin foam refers to a structure of a resin material formed in a foamed or porous shape with gas minutely dispersed therein. The material thereof can be a publicly-known resin foam material and is preferably polyolefin resin, polyurethane, polyethylene, polystyrene, or the like. The honeycomb structure represents all three-dimensional structures composed of plural small spaces surrounded by sidewalls. When the hollow structure is composed of a three-dimensional structure having walls made of resin material, the resin material constituting the walls is preferably a thermoplastic resin selected from: polyolefins (for example, polypropylene or high-density polyethylene) as homopolyners or copolymers of olefins such as ethylene, propylene, butene, isoprene pentene, and methyl pentene; polyamide; polystyrene; polyvinyl chloride; polyacrylonitrile; acrylic derivatives such as ethylene-ethyl acrylate copolymer; polycarbonate; vinyl acetate copolymers such as ethylene-vinyl acetate copolymers; ionomer; terpolymer such as ethylene-propylene-dienes; ABS resin; polyolefin oxide; and polyacetal. The walls may be composed of one of the aforementioned materials solely or may be composed of two or more of the aforementioned materials mixed together. Among the thermoplastic resins, especially olefin resin, resin mainly composed of olefin resin, polypropylene resin, and resin mainly composed of polypropylene resin are preferred in terms of the excellent balance between the mechanical strength and formability. The resin material may include additives. The additives include: inorganic fillers such as silica, mica, talc, calcium carbide, glass fibers, and carbon fibers; plasticizers; stabilizers; colorants; antistatic agents; flame retardants; and blowing agents.

The intermediate layer may be a layer composed of a resin plate. In this case, the resin material constituting the intermediate layer can be preferably the same material as the material constituting the above-described supporting body of the film mirror.

The intermediate layer is not necessary provided over the entire region of the base material and may be provided for a partial region as long as the intermediate layer can secure the flatness of the metallic plates and the self-supporting ability as the base material. When the intermediate layer is configured to have the above-described three-dimensional structure, the three-dimensional structure is provided preferably for a region of 90% to 95% of the area of the metallic plates. When the intermediate layer is made of resin foam, the intermediate layer is preferably provided for a region of about 30% to 40% thereof.

Like the aforementioned configuration B, the self-supporting base material can be a layer composed of a resin material having a hollow structure. If the base material is composed of only resin, the base material needs to have large thickness in order to provide rigidity enough to have the self-supporting property, thus resulting in an increase in weight thereof. However, the resin base material having the hollow structure can be provided with the self-supporting property and can be reduced in weight. When the base material is a layer composed of a resin material having a hollow structure, in terms of increasing the regular reflectance of the film mirror, resin sheet having smooth surface is provided as a surface layer while the resin material having a hollow structure is used as the intermediate layer. The material of the resin sheet can be preferably the same material as the material constituting the supporting body of the film mirror. The resin material constituting the hollow structure can be preferably the same resin material as the aforementioned foam material or the material used in the three-dimensional structure.

### (Holder Member)

The reflection device for solar thermal power generation of the present invention further includes the holder member which holds the aforementioned reflector so that the reflector can track the sun. The mode of the holder member is not particularly limited but is preferably a mode in which plural stick holder members hold plural portions so as to keep the desired shape of the reflector. The holder member is configured to hold the reflector so that the reflector can track the sun. The reflector may be manually driven for tracking the sun or may be configured to automatically track the sun using another driving device. According to the reflection device for solar thermal power generation of the present invention, the reflector can be reduced in weight, and the power consumption for tracking the sun can be therefore reduced. Accordingly, it is preferable that the reflector is provided with another driving device to automatically track the sun.

### Examples

Hereinafter, the present invention is described by examples but is not limited to these examples.

### Example 1

### (Production of Light Collecting Mirror)

### (Production of Film Mirror)

As the flexible supporting body, bi-axially oriented polyester film (polyethylene terephthalate film, 100 µm thick) was used. One side of the polyethylene terephthalate film is coated with resin by gravure coating so that a 0.1 µm thick adhesive layer was formed. The coating resin contained polyester resin (POLYESTER SP-181, Nippon Synthetic Chemical Industry, Co., Ltd), melamine resin (Super Beckamine J-820, DIC corporation), TDI isocyanate (2,4-tolylene diisocyanate), HDMI isocyanate (1,6-hexamethylene diisocyanate) which were mixed into toluene at a resin solid content ratio of 20/1/1/2 with a solid content concentration of 10%. On the surface opposite to the adhesive layer, a 80 nm-thick silver reflective layer was formed by vacuum vapor deposition as a silver reflective layer, which was then coated by gravure coating with resin containing polyester resin and TDI (tolylene diisocyanate) isocianate mixed at a resin solid content ratio of 10/2 to form a 0.1 µm-thick upper adjacent layer, thus providing a film mirror whose supporting body was made of film.

### (Production of Glass Mirror)

A glass mirror was produced in a similar manner to the aforementicned film mirror except that the supporting body was composed of a 1.5 mm-thick plate glass. The plate glass used here was flexible.

### (Production of Reflector for Solar Thermal Power Generation)

The adhesive layers of the light collecting mirrors shown in Table 1 were faced and attached to the self-supporting base materials shown in Table 1 to produce reflectors 1 to 12 for solar thermal power generation. The weight, transportation efficiency, and driving power consumption rate of the reflectors 1 to 12 were measured. In Table 1, the thickness of each base material was 4 to 5 mm. The both-surface material refers to the material sandwiching the layer having a hollow structure. The thickness of each both-surface material was 0.5 mm. The "resin" in Table 1 is polyolefin resin, and the "resin foam 1" is foamed polyethylene resin. Each three-dimensional cell of the honeycomb structure had a size of 1/4 inches (1 inch = 2.540 cm). The resin foam 2 was polypropylene hard resin foam.

In Table 1, the type of the self-supporting base material corresponds to A or B of claim 1.

### (Evaluation Method)

### Weight

The weight of the obtained 1.5 m² reflectors 1 to 12 for solar thermal power generation was measured. The measured weight was divided by the weight of the reflector 12 for solar thermal power generation and rounded to two decimal places, and the results thereof are shown in the table 1.

### Transportation Efficiency

The reciprocal of the weight of the obtained 1.5 m² reflectors 1 to 12 for solar thermal power generation is shown in the table 1.

### Driving Power Consumption Ratio

Table 1 shows the ratio of driving power for tracking the sun of a sun tracking-type reflection device for solar thermal power generation when each reflector was assembled in the reflection device to that of the reflection device including the reflector 12, which is set to 1.

**Table 1**

| Mirr or No. | Combination of Light Collecting Mirror And Self-supporting Base Material | | | | Weight of Mirror For Solar Thermal Power Generatio n (Relative Ratio) | Transportat ion Efficiency | Driving Power Consumption Ratio | Note |
|---|---|---|---|---|---|---|---|---|
| | Type of Light Collecting Mirror | Self-supporting Base Material | | | | | | |
| | | Type | Intermediate Layer | Material | | | | |
| 1 | Film Mirror | A | Honeycomb Structure | Aluminum/Aluminum/ Aluminum | 0.3 | 3.33 | 0.3 | Invention |
| 2 | Film Mirror | A | Bubble Structure | Aluminum/Resin Foam 1/Aluminum | 0.25 | 4.00 | 0.3 | Invention |
| 3 | Glass Mirror | A | Honeycomb Structure | Aluminum/Aluminum/ Aluminum | 0.55 | 1.82 | 0.5 | Invention |
| 4 | Glass Mirror | A | Bubble Structure | Aluminum/Resin Foam 1/Aluminum | 0.5 | 2.00 | 0.5 | Invention |
| 5 | Film Mirror | A | - | Aluminum/Resin/Alu minum | 0.4 | 2.50 | 0.4 | Invention |
| 6 | Glass Mirror | A | - | Aluminum/Resin/Alu minum | 0.7 | 1.43 | 0.8 | Invention |
| 7 | Film Mirror | B | - | PET Sheet/Resin foam 2/PET Sheet | 0.25 | 4.00 | 0.3 | Invention |
| 8 | Glass Mirror | B | - | PET Sheet/Resin foam 2/PET Sheet | 0.5 | 2.00 | 0.5 | Invention |
| 9 | Film Mirror | B | - | Resin Foam 2 | 0.25 | 4.00 | 0.3 | Invention |
| 10 | Glass Mirror | B | - | Resin Foam 2 | 0.5 | 2.00 | 0.5 | Invention |
| 11 | Film Mirror | - | - | Aluminum | 0.8 | 1.25 | 1.0 | Comparative Example |
| 12 | Glass Mirror | - | - | Aluminum | 1.0 | 1.00 | 1.0 | Comparative Example |

Table 1 shows that the reflectors for solar thermal power generation of the present invention including the base materials of a hollow structure were considerably lighter than the reflectors for solar thermal power generation of the comparative examples. The transportation efficiency was therefore increased, thus leading to shortening of the working hours and reduction in cost. Moreover, the driving power for tracking the sun could be reduced. In the cases of the configuration B, the reflectors with the surfaces including PET, similar to the flexible supporting bodies of the light collecting mirror, had higher flatness and higher regular reflectance of the mirror surface than the reflectors with the surfaces not including PET.

### [Industrial applicability]

The present invention is configured as the above, thus applicable as a reflector for solar thermal power generation and a reflection device for solar thermal power generation which reflect the sunlight.

## Claims

1. A reflector for solar thermal power generation, comprising:
a light collecting mirror attached to a self-supporting base material, the light collecting mirror including at least:
a flexible supporting body; and a light/heat reflective layer provided on at least one side of the supporting body, wherein
the self-supporting base material has any one of configurations A and B below:
A: the base material includes a pair of metallic plates and an intermediate layer provided between the metallic plates, the intermediate layer being a layer having a hollow structure or a layer composed of a resin material; and
B: the base material is composed of a resin material layer having a hollow structure.

2. The reflector for solar thermal power generation according to claim 1, wherein the hollow structure is a honeycomb structure or a bubble structure of resin foam.

3. The reflector for solar thermal power generation according to claim 1 or 2, wherein the base material has a curved shape.

4. The reflector for solar thermal power generation according to any one of claims 1 to 3, wherein the light collecting mirror including the light/heat reflective layer is a light collecting mirror including a supporting body made of glass or resin film.
